# EUROPEAN PATENT SPECIFICATION

(11) **EP 1 604 519 B1**
(45) Date of publication and mention of the grant of the patent: **21.03.2012**
(21) Application number: 04713447.3
(22) Date of filing: 20.02.2004
(51) Int. Cl.: H04N 5/91, H04N 5/445, H04N 5/928, H04N 7/00, H04N 7/04, H04N 7/06, H04N 7/08

(54) **APPARATUS AND METHOD FOR SIMULTANEOUSLY UTILIZING AUDIO VISUAL DATA**
VORRICHTUNG UND VERFAHREN ZUR SIMULTANEN VERWENDUNG VON AUDIOVISUELLEN DATEN
APPAREIL ET PROCEDE POUR L'UTILISATION SIMULTANEE DE DONNEES AUDIOVISUELLES

(30) Priority: 21.02.2003 US 449162 P
(43) Date of publication of application: 14.12.2005
(60) Divisional application: 10183119.6
(73) Proprietor: Panasonic Corporation, Kadoma-shi Osaka 571-8501 (JP)
(72) Inventor: MC CROSSAN, Joseph, Burbank, CA 91501 (US); KOZUKA, Masayuki, Toyonaka Osaka 560-0082 (JP); MINAMI, Masataka, Hyogo 662-0066 (JP)
(74) Representative: McCarthy, Denis Alexis
(86) International application number: PCT/US2004/005245
(87) International publication number: WO 2004/077811

(56) References cited:
- EP-A- 0 788 106
- US-A- 5 561 471
- US-A- 5 684 542
- US-A- 5 847 770
- US-A- 5 999 225
- US-A- 6 104 861

## Description

### CROSS-REFERENCE TO RELATED APPLICATIONS

This application claims the benefit of a provisional application Serial No. 60/449,162 filed on February 21, 2003 for the utilization of interchangeable AV data residing on storage media. The entire contents of the provisional application is incorporated herein by reference.

### FIELD OF THE INVENTION

The present invention relates to reproducing video, audio, and subtitle data and more particularly to reproducing multiple interchangeable types of data simultaneously.

### DESCRIPTION OF RELATED ART

On a conceptual level, Audio Visual (AV) multimedia content designed for distribution and playback, typically consists of one or more data streams containing multiple interchangeable components or substreams conforming to an AV content distribution and/or playback standard. Such standards specify a player model whereby only one substream from a particular type or class of data streams can be reproduced at the same time. There can be, for example, multiple audio substreams available for a particular AV application, but only one audio substream is selected for reproduction.

The AV applications typically conform to a de-facto standard so that they can be decoded and presented by players in a consistent fashion. A current format includes the Digital Versatile Disc (DVD-Video) format, and future examples include the High Density-Digital Versatile Disc (HD-DVD) format and the Blu-ray Disc (BD) pre-packaged format. Such de-facto standards specify a conceptual model such that each player will use this model to determine correct decoding behavior. AV applications will be written to the platform defined by the conceptual player model and in the data format specification defined by the standard to ensure consistent behavior during playback across different players.

This scheme has drawbacks, however, in that it is not possible for content creators who are authoring the AV applications to take advantage of higher performance or extended functionality implemented in players after the de-facto standard has been established. For example, positions for graphical presentation data are fixed being predetermined at the Authoring time based on the player model which defines simultaneous playback of only one media substream of each stream time. The de-facto standard is reinforced in that the menus contained in the AV application are designed such that only substream of each stream type can be selected for reproduction.

AV applications residing on optical storage media, for example, often contain several different types of data streams with interchangeable substreams. For example, an audio type of data stream could include a main audio substream, commentary substreams from directors, actors, or producers, and a dialog translation substream. These data streams are either audible or visual in nature. In such AV applications, the user can select only one substream from a particular class or type of data stream for rendering during the AV application runtime.

European Patent Specification No. EP-A-0 788 106 discloses a multimedia optical disc including a lot of blocks, each of which stores moving picture data, audio data, sub-picture data, and control information. Each piece of moving picture data, audio data, sub-picture data, and control information in the same block has the same reproduction time limit. Each piece of control information includes a mask flag indicating whether to mask a key interrupt requesting a special reproduction such as fast forward, the key interrupt being generated by the user by pressing a key on a remote controller and the like. The mask flag is effective for the key interrupt generated during the reproduction time limit stored in the control information.

United States Patent Specification No. US-A-6 128 434 discloses a reproduction apparatus designed to select and decode speech and subtitles (characters) in a given language from a disk on which various types of information are recorded in different languages. US-A-6 128 434 discloses that various types of information are recorded in different languages in a disk, along with video information. A reproduction apparatus selects information in a given language from the reproduced information using a data string processing section, a system control section, and an operator section, and supplies the selected pieces of information to each of a video processing section, a subtitle decoder, and an audio processing section.

There is a need to provide an extended player model that overcomes the limitations and problems of media produced according to de-facto standards that restrict reproduction to only one substream from a plurality of substreams.

### BRIEF SUMMARY OF THE INVENTION

The present invention, as defined in the claims, overcomes the disadvantages associated with existing, one-substream decoding based player models, by describing a method and apparatus defining User Interface (UI) models and Player Models (PM) such that interchangeable substreams can be simultaneously utilized during AV application reproduction.

By the present innovation, interchangeable substreams contained on optical storage media, for example, can be simultaneously utilized during AV application reproduction, thus providing new usage models for this data in addition to those already defined by the AV application itself. Moreover, a means to associate independent data streams together is described, thereby also providing new usage models. Several applications can be derived from a system that can simultaneously decode and render multiple media data streams:
1) Language Education. Two or more unique subtitle streams are available for one AV application. One embodiment of the system of the present invention provides the user with an option of selecting a plurality of subtitle substreams to render and where, on screen, they should be displayed. As each subtitle stream is in a different language, this system can provide the user with a useful tool for language education. For example, the user can select one of an Asian language subtitle substream and an English subtitle substream for simultaneous display during the reproduction. A user of such a system would be able to see both English and the Asian language subtitles simultaneously as an aid for language learning.
2) Personalized audio track. If two or more unique audio streams are available for one AV application, one embodiment of the present invention can provide each user with a personal audio playback system and an option of which audio stream to decode on their personal audio playback system. This personal audio playback system could be, for example, a radio receiver with headphones. Such a system would be useful for providing audio dialog translation or commentary streams when the same media presentation is provided at the same time to multiple users.
3) Personalized visual dialog translation. When two or more unique subtitle substreams are available for one AV application, one embodiment of the present invention provides each user with a personalized display and an option to select which subtitle substream to decode on their personal display. This would be useful for providing personalized dialog translation when the same media presentation is provided at the same time to multiple users who wish to view a particular subtitle substream that other users may not wish to view. This would also be useful in a public gathering where groups of users who wish to view a particular subtitle stream associated with the media presentation view from a common display for that group of users where more than one language is commonly used.

### BRIEF DESCRIPTION OF THE DRAWINGS

The exact nature of this invention, as well as the objects and advantages thereof, will become readily apparent upon consideration of the following specification in conjunction with the accompanying drawings in which like reference numerals designate like parts throughout the figures thereof and wherein:
Figure 1 is a block diagram showing multiple subtitle substreams according to a first embodiment which is included for the purposes of description.
Figure 2A is a flow diagram showing a user selection method for the display location of a plurality of subtitle substreams on a single display unit where the priority of display is assumed to be the order the substreams are selected.
Figure 2B is a flow diagram showing a user selection method for the display priority of a plurality of subtitle substreams on a single display unit.
Figure 2C is a flow diagram showing a user selection method for the display location of a plurality of subtitle substreams on a single display unit.
Figure 2D is a flow diagram showing a presentation of the multiple subtitle selection to a user.
Figure 3 is a flow diagram showing a user selection method for rendering a plurality of subtitle substreams on multiple display units.
Figure 4A depicts an example of two subtitle streams displayed in a top-and-bottom orientation.
Figure 4B depicts an example of two subtitle streams displayed in a side-by-side orientation.
Figure 5 is a block diagram showing multiple subtitle substreams according to a second embodiment.
Figure 9 is a flow diagram showing the user model associated with the second embodiment including the auto-repeat feature.

### DETAILED DESCRIPTION OF THE PREFERRED EMBODIMENTS

Reference will now be made in detail to the preferred embodiments of the invention, examples of which are illustrated in the accompanying drawings. While the invention will be described in conjunction with the preferred embodiments, it will be understood that they are not intended to limit the invention to these embodiments.

Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, components, and circuits have not been described in detail as not to unnecessarily obscure aspects of the present invention.

The present invention, as defined in the claims, includes user selection models for multiple substream decoding and/or data stream association coupled together with a player model, extending the current art player design to incorporate decoding behavior based on user selection information including multiple interchangeable substream decoding.

The following description of the presently preferred embodiments teach user selection methods for selection of multiple substreams to be utilized during AV application runtime and can be used in conjunction with the stream selection methods provided by the AV application itself.

Further, the presently preferred embodiments teach user selection methods for providing new application usage models involving two or more interchangeable substreams and a player model incorporating user preference information to provide a framework to decode and utilize two or more interchangeable substreams where the AV application itself does not provide such an option. The user selection methods may be provided via on-screen or on-device selection or more simply via direct key presses on a remote control unit.

When interchangeable substreams are to be simultaneously visually rendered on the same display, a user selection method for adjusting the display location of the visual substreams may be provided. Typically, location information is provided by the AV application itself where substreams will be designed to appear at particular display locations. This invention provides user selection models to define information used by the player to alter the behavior of the standard decoding model, as defined by the standard to which the AV application is designed, in order to incorporate user defined preferences for location of visual substreams; typically location information for visual substreams is pre-defined at the time of Authoring the AV application.

The user preference information may be used in conjunction with location information associated with the visual substream to provide offset locations for visual data or may be used instead of location information associated with the substream. Moreover, multiple visual substreams to be simultaneously displayed are alpha overlaid together prior to display on a single display unit - a user selection method and player capability may be provided to determine the order of overlay for visual substreams whereby the user will determine the priority of the substreams and the player will overlay higher priority substreams last, at the top, and so obscure the appearance of lower priority substreams should they share the same area on the display.

When interchangeable substreams are to be simultaneously rendered on different devices, a user selection method for substreams-to-device is provided and the player model is extended to incorporate such simultaneous output. When the interchangeable substream is to be rendered remotely from the main playback environment a means to transmit the substream and a remote playback device is provided. For the purposes of this description, a composite media stream containing a plurality of different types of streams such as a video stream, an audio stream, and a subtitle stream may also include a plurality of substreams of these various types. The terminology of a substream is used to exemplify a number of identical streams of the same type and not necessarily to distinguish from a particular type of composite media stream where only one stream of that type is included.

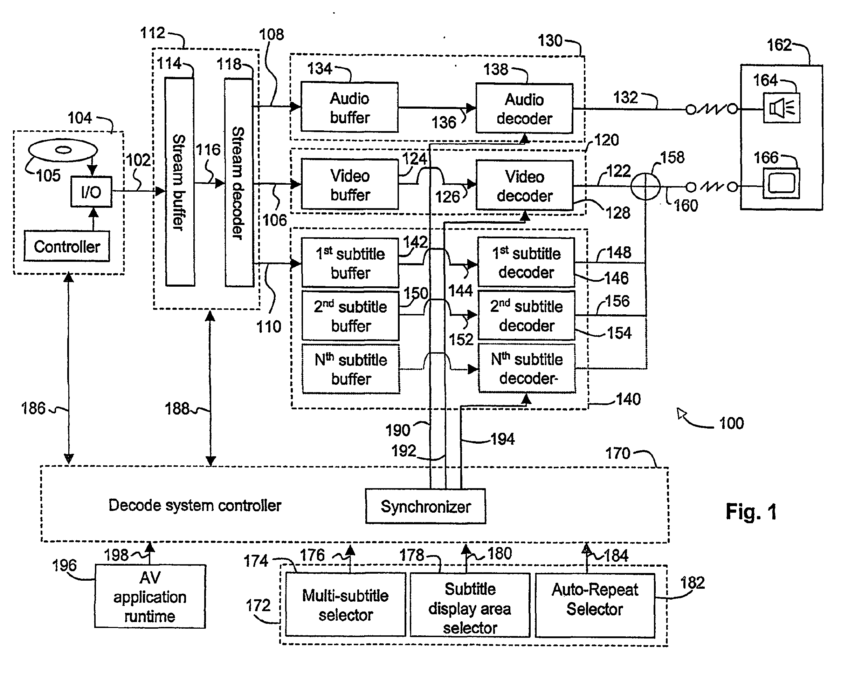

In reference to Figure 1, an Audio Visual (AV) reproduction system 100 for reproducing AV data is shown in a first embodiment including a plurality of subtitle substreams in a playback environment with one display unit. The reproduction system 100 may also be considered a player model. The AV player model 100 receives a composite media stream 102 provided by a composite media source 104. For this and other embodiments, the composite media source 104 can be a player device for a fixed media element 105 such as Digital Versatile Disc (DVD), High Density Digital Versatitle Disc (HD-DVD) or Blu-ray Disc (BD) optical media.

The player device can read information from the fixed media element 105 and produce the composite media stream 102. Alternatively, the composite media source 104 can be a media receiver for receiving a broadcast signal for this or other embodiments. The broadcast signal can be an Over-The-Air (OTA) signal such as that which is broadcast by a television station or, in another alternative transmission source, the broadcast signal can be a cable-based signal from a cable service provider, for example. The media receiver can receive a Radio Frequency (RF) signal and extract the composite media stream 102 directly or store the signal to another media device before extracting the composite media stream 102.

The composite media stream 102 includes a video data-stream 106, an audio data-stream 108, and a subtitle data-stream 110 including a plurality of subtitle substreams. The terms stream and data-stream are equivalent for this description. A composite media stream separator unit 112 receives the composite media stream 102 and extracts the video stream 106, the audio stream 108, and the subtitle data-stream 110 including a plurality of subtitle substreams as directed by the decode system controller 170. The composite media stream separator unit 112 includes a composite media stream buffer 114 for receiving and storing the composite media stream 102 and producing a buffered composite media stream 116. The buffered composite media stream 116 is applied to the composite media stream decoder 118 that separates the video substream 106, the audio substream 108, and the subtitle substream 110 from the buffered composite media stream 116.

A video decoder unit 120 receives the video stream 106 and produces a decoded video output 122. The video decoder unit 120 includes a video buffer 124 that receives the video stream 106 and produces a buffered video stream 126. A video decoder receives the buffered video stream 126 and produces the decoded video output 122.

An audio decoder unit 130 receives the audio stream 108 and produces a decoded audio output 132. The audio decoder unit 130 includes an audio buffer 134 that receives the audio stream 108 and produces a buffered audio stream 136. An audio decoder 138 receives the buffered audio stream 136 and produces the decoded audio output 132.

A subtitle decoder unit 140 of the present embodiment simultaneously decodes a plurality of subtitle substreams to produce a corresponding plurality of decoded subtitle outputs. The subtitle decoder unit 140 receives the subtitle data stream 110 including a plurality of subtitle substreams and buffers each subtitle substream to produce a corresponding plurality of buffered subtitle substreams.

For example, a first subtitle substream is buffered by a first subtitle buffer 142 to produce a buffered first subtitle substream 144. A first subtitle decoder 146 receives the buffered first subtitle substream 144 and produces a first decoded subtitle output 148. Similarly, a second subtitle substream is buffered by a second subtitle buffer 150 to produce a buffered second subtitle substream 152. A second subtitle decoder 154 receives the buffered second subtitle substream 152 and produces a second decoded subtitle output 156. this buffering and decoding is done for each of the user selected subtitle substreams. The user selected subtitle substreams defines a display configuration that determines which subtitle substreams are selected and how the subtitle substreams are displayed.

Buffering and decoding as herein described is drawn to a conceptual model only, whereas an actual implementation may utilize software only decoding processes or one hardware decoder capable of decoding two or more streams within the constraints of simultaneous AV application playback. The phrase simultaneous decoding includes the ability of decoding whether serially or in parallel so that the decoded data may be used within the same associated portion of the media presentation, and does not only comprehend parallel decoding with separate decoding units.

A video rendering unit 158 receives the decoded video output 122 and the plurality of decoded subtitle outputs (148, 156) to produce a rendered video output 160 composed of an overlay of the selected decoded information, and presented according to user defined priority information provided to the subtitle substream selector unit 174 and the decode system controller 170. The rendered video output 160 is an alpha overlay of the plurality of decoded subtitle outputs on the decoded video output 122. The decoded audio output 132 and the rendered video output 160 are applied to a reproduction unit 162 having an audio reproduction unit 164 and a video reproduction unit 166. The audio reproduction unit 164 receives the decoded audio output 132 and reproduces the decoded audio output in audible form. The video reproduction unit 166 receives the rendered video output 160 and reproduces the rendered video output 160 in a visual form.

A decode system controller 170 provides configuration and synchronization processes for the AV reproduction system 100. In addition to the information regarding desired substream decoding provided by the AV application, the decode system controller 170 receives user preference information from a user command unit 172. The user command unit 172 includes a subtitle substream selector 174 that provides a selected subtitle substream user input 176 regarding the selection of subtitle substreams. This information is used by the system controller 170 in addition to the subtitle substream selection provided by the AV application so that both the AV application information and additional user input supported by the player model are used together to determine which substreams are rendered during reproduction.

Additional user input may be used instead of the subtitle substream selection provided by the AV application thereby giving the player complete control over which substreams are decoded. The user command unit 172 may include a subtitle substream display area selector 178 to provide a display location user input 180 regarding the selected display location for the selected subtitle substreams. This information is used by the system controller 170 to determine the position of subtitle substreams after decoding (148, 158) and is passed by the system controller 170 to the subtitle decoders (146, 154). The system controller 170 may signal to the subtitle decoders (146, 154) that the user input is used in addition to the information contained in the actual subtitle substreams selected by the AV application thus providing offsets to visual data.

Alternatively, the user input display locations may be used instead of and without regard to the display location information described by the AV application this providing absolute positions for the visual data. The user command unit 172 may include an auto-repeat selector 182 that provides an auto-repeat user input 184 for commanding an automatic repeating the reproduction of a predetermined portion of the rendered video output 160 with either the same display configuration as previously reproduced, or with a different display configuration showing either the same set of selected subtitles or a different set of selected subtitles. The user selected subtitle substreams defines a display configuration that determines which subtitle substreams are selected and how the subtitle substreams are displayed. The auto-repeat selector applies a user input to automatically repeat the reproduction of a predetermined portion of the composite media stream with the selected display configuration.

In the case of a different display configuration, the user may provide information on the alternative display configuration before playback begins or during runtime by accessing player menus or via remote control key presses. When an auto-repeat occurs, the system controller 170 may cause the playback position to jump back a certain user-defined amount, to jump to a user-defined point in the media presentation, to some point defined by the media source 104, or included within the media element 105. The AV application runtime 196 represents the current state of an AV application during playback. It includes the state of the virtual machine used to execute commands and store results as well as the player state which includes information on the current substreams that are in the process of being decoded. The AV application runtime 196 provides control information 198 to the decode system controller 170 regarding stream playback. This includes, but is not limited to: the streams are to be decoded and played back, including the position of playback, playback start, playback pause or stop, and trick play (fast-forward or rewind), for example.

The decode system controller 170 both provides control signals to and receives status information from the various resources of the AV reproduction system 100. The decode system controller 170 communicates with the composite media source 104 via a media source signal 186. The media source signal 186 includes signals from the decode system controller 170 to the composite media source 104 in order to operate the composite media source 104 as well as status signals from the composite media source 104 to the decode system controller 170.

For example, a status signal may indicate that a fixed media element 105 has been inserted into the composite media source 104 and is ready for reading. Alternatively, a status signal may indicate that a broadcast signal is received or in process of reception. The decode system controller 170 can assert a signal to a controller in the composite media source to instruct the composite media source to begin reading data from the inserted fixed media element 105 or else to begin outputting the information from reading such an element as the composite media stream 102.

The decode system controller 170 communicates with the composite media stream separator unit 112 via a media separator signal 188. The media separator signal 188 includes signals from the decode system controller 170 to the composite media stream separator unit 112 in order to operate the stream buffer 114 and the stream decoder 118. The media separator signal 188 includes signals from the media stream separator unit 112 to the decode system controller 170 to indicate the status of the composite media stream buffer 114, whether the composite media stream buffer 114 is empty, half full, or full, for example. Similarly, the composite media stream decoder 118 asserts status signals and information to the decode system controller 170 including, for example, stream management information such as frame boundary information, the number and type of substreams, and stream validation information such as check-sums.

The decode system controller 170 also provides a synchronization function by which the related media streams are aligned for decoding and outputting so as to comport to the standard frame boundary. According to one standard, the frame consists of one-half second intervals during reproduction. In other standards, alternative reproduction periods may be used along with other timing-related controls. For example, a pause function may be used to halt the reproduction at the current frame. In the case where the composite media stream 102 comes from a fixed media element 105, the decode system controller will also halt reading of the fixed media element 105 so as to minimize the required size and cost of the composite media stream buffer 114.

The precise implementation details are known to a person of skill in the art and are not repeated here in order to not obscure the novelty of the present invention. Various further preferred features and embodiments of the present invention will now be described with reference to the following non-limiting examples.

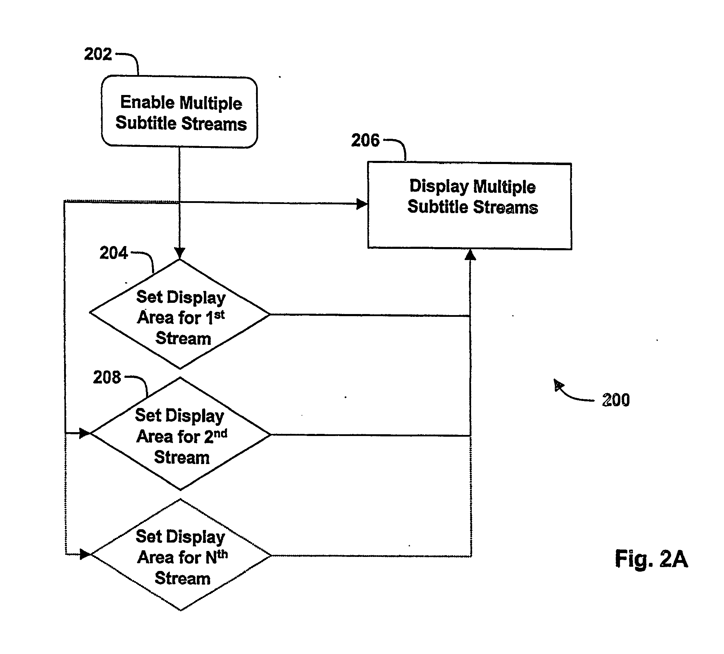

Figure 2A is a flow diagram showing, at a high level, the user selection model for selecting multiple subtitle substreams where the priority of display is assumed to be the order of the substreams selected. A user enables the selection of multiple subtitle substreams in step 202. This may be accomplished by the pressing of keys on a specially programmed remote control device which communicates with the AV reproduction system 100 by an infrared optical channel or by entering the information directly on a control panel user interface (not shown) of the AV reproduction system itself. For example, a user can press one or more buttons on the remote control unit or control panel to enable multiple subtitles an then select which subtitle streams should be shown.

In another alternative, the user can enter this preference information via an on-screen menu. After the selection of multiple substreams is enabled in step 202, the user selects the display area for the first stream. Following this selection, the selected subtitle is set for display in step 206. Similarly, to select a second subtitle stream, a user enables the selection of multiple substreams in step 202 and then sets the display area for the second stream in step 208. Following this selection, the selected subtitle is set for display in step 206 with the highest priority for display assigned to the first substream and the next lower display priority being assigned to the second subtitle substream. This process is repeated for subsequently selected substreams which are displayed at a decreasingly lower priority.

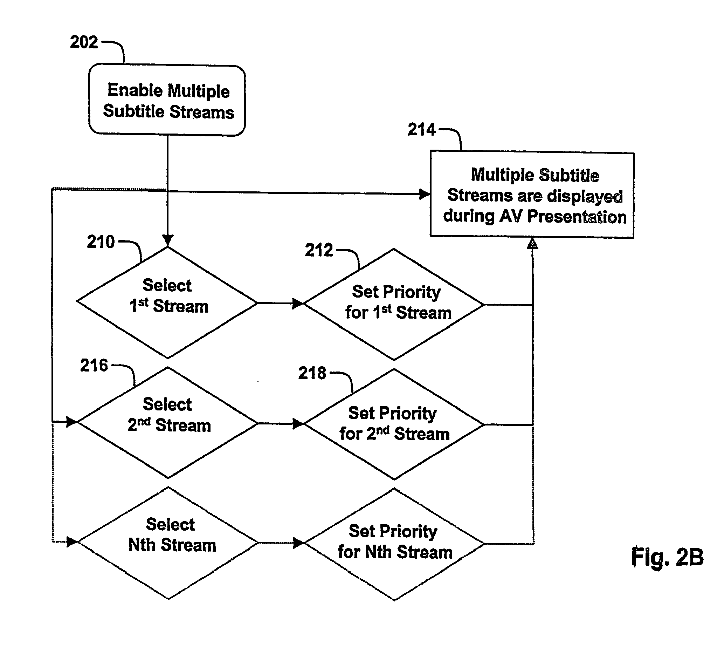

In an alternative selection mode, once the multiple subtitle substreams are selected, a display priority for each selected subtitle substream may be manually set by the user as shown in Figure 2B. After the selection of multiple substreams is enabled in step 202, the first stream is selected in step 210 and the display priority may be set in step 212 by entering a variable number using the numeric keys on the remote control, or by selecting from a palate of fixed choices for display such as high, normal, and low for each of the selected subtitles. Once the priority is set for the selected substream, the selected multiple subtitle streams are set for display in step 214. Similarly, the selection of multiple substreams is enabled in step 202 and the second stream is selected in step 216 and the display priority may be set in step 218. This process is repeated for each selected substream.

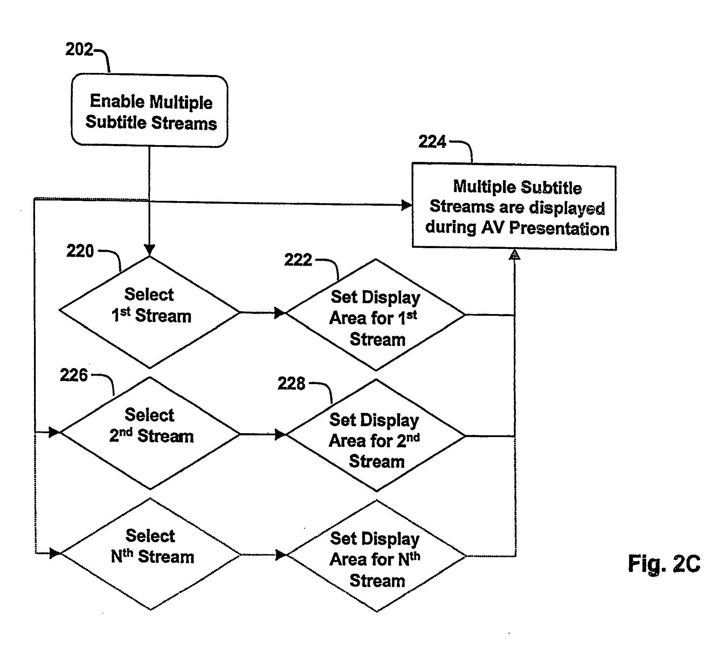

An error condition may be generated if a subsequent subtitle substream is set to the same priority as another previously defined substream. Feedback to the user performing the setup procedure can be shown visually on the video reproduction unit 166 or on a remote device. Once the multiple subtitle streams are selected, a display area for each selected subtitle substream may be set by the user as shown in Figure 2C. The display location for the first subtitle substream may be set in step 222. This may be accomplished by selecting from a palate of fixed choices for display area such as bottom-center, top-center, top-right, top-left, bottom-right, and bottom-left for each of the selected subtitles. An error condition may be generated if a subsequent subtitle substream is set for an overlapping display area with a previously selected area. Feedback to the user performing this setup procedure can be shown visually on the video reproduction unit 166.

Another method for selecting multiple subtitle substreams and then selecting a display area for the selected substreams is shown in Figure 2C. After the selection of multiple substreams is enabled in step 202, the first stream is selected in step 220 and the display area may be set in step 222 as described in reference to Figure 2A. Once the first stream is selected and the display area for the first stream is selected, the first selected subtitle stream is set for display in step 224. After the selection of multiple substreams is enabled in step 202, the second stream is selected in step 226 and the display area may be set in step 228. Once the second stream is selected and the display area for the second stream is selected, the second selected subtitle stream is set for display in step 224.

Alternatively, the position of the rendering location may be flexible, and determined based on user inputs that include locating an anchor point, say the bottom-left corner of the rendering box, at a particular point on the screen based on user inputs that can determine an X-Y (horizontal-vertical) location on the display screen. These choices can be presented to the user as a part of the initialization or setup process prior to accessing a selected composite media source 104.

The choices for display position/area can be presented to the user as a part of the initialization or setup process prior to accessing a selected composite media source 104 or prior to playback of the AV presentation. Alternatively, they can be presented to the user during the playback of the AV application, where the playback of the AV presentation is not interrupted and the user can select, dynamically, which area the subtitle substream is allocated to.

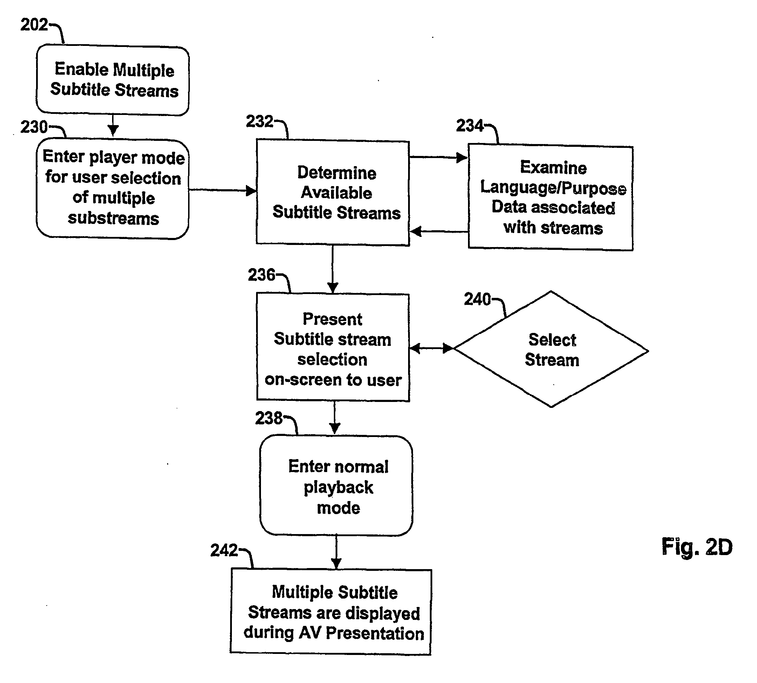

A possible means to present subtitle choices to the user, both on screen and via remote display is shown in Figure 2D. Multiple subtitle stream reproduction capability is enabled in step 202. Once multiple subtitle streams are enabled, a player mode for user selection of multiple substreams is entered in step 230. In step 232 the available subtitle streams are determined. In step 234 the player can use language and/or purpose descriptions associated with the subtitle substreams to present options to the user on-screen for selection of the multiple subtitle substreams to be used during AV presentation.

Once this information is determined, the subtitle stream selections are presented to the user in step 236. If no language and/or purpose information is available, the player can automatically assign another code value to each stream. If no subtitle substreams are available for selection, the reproduction system can enter the normal playback mode in step 238. If subtitle substreams are available for selection, the user proceeds to selection of the available subtitle substreams in step 240.

Alternatively, this information could be obtained using a predetermined technique at Authoring. In such a case, when Authoring the AV application, a specific process will be followed for setting the subtitle substream by the AV application. This can be accomplished by using specific values in reserved fields or by providing a specific structure sequence that is not likely to occur under normal authoring conditions, for example. The player can then use the AV application menus to provide the user with options to set multiple streams instead of player generated menus; each time the user selects an item from the menu, the player checks to see if a specific register has been set and if so add the corresponding subtitle substream to the list of substreams to be displayed. The player could display feedback to the user using a player specific display or an on-screen menu.

EXAMPLE 1: Two or more unique subtitle substreams are available for one AV application. The system provides the user with an option of which subtitle substreams to render and the on-screen location where each should be displayed. Figure 1 illustrates the player model while Figures 2-3 show the user models for this embodiment.

EXAMPLE 2: For example, each subtitle stream can be in a different language and this system can provide the user with a useful tool for language education - the user can view two subtitle substreams simultaneously and use one subtitle substream as a reference to the other. This example application would be particularly useful for the Asian market where, for example, English and Japanese language subtitle streams could be simultaneously displayed. Of course, any two languages available from the composite media stream may be selected. Further, more than two subtitle substreams may be shown depending on the user selection.

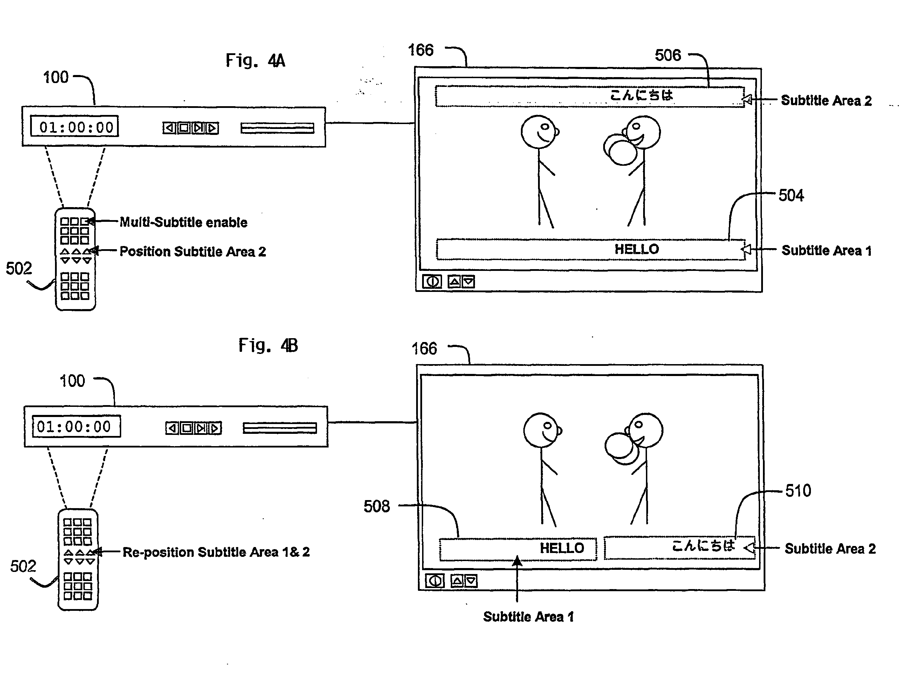

Figures 4A-4B show examples of this application where two subtitle substreams are shown in two different configurations. Figure 4A depicts an example of two subtitle streams displayed in a top-and-bottom orientation. The AV reproduction system 100 is programmed via a specially programmed remote control unit 502. A first key on the remote control unit 502 is used to enable the multiple-subtitle substreams as described in reference to Figure 4A. In this case, the first selected subtitle substream 504 is positioned near the bottom portion of the display while the second selected subtitle substream 506 is positioned near the top portion of the display. The position of the first subtitle substream can be a default value near the bottom of the display of the video reproduction unit 166.

Similarly, Figure 4B depicts an example of two subtitle streams displayed in a side-by-side orientation which are selected as described above. In this case, the first selected subtitle substream 508 is positioned near the bottom-left portion of the display while the second selected subtitle substream 510 is positioned near the bottom-right portion of the display. A user can toggle between these two display configurations by pressing a particular key on the specially programmed remote control device 502. The user selected subtitle substreams defines a display configuration that determines which subtitle substreams are selected and how the subtitle substreams are displayed. Figure 4A defines a first display configuration. Figure 4B defines a second display configuration. The auto-repeat selector applies a user input to automatically repeat the reproduction of a predetermined portion of the composite media stream with the selected display configuration and can toggle between the predetermined first and second display configurations.

According to one industry standard, a DVD-Video application can contain up to 32 subtitle substreams. Currently, DVD-Video players can playback only one subtitle stream or substrearn during the DVD-Video application runtime. This innovation, when applied to DVD-Video, defines a method for simultaneously reproducing multiple subtitle substreams thus providing a useful tool for language education.

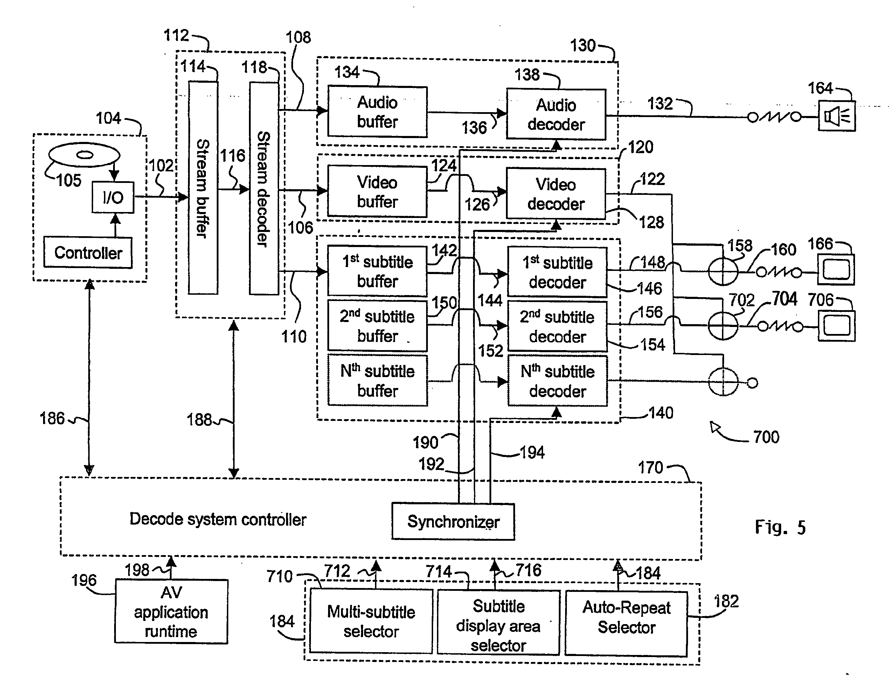

In reference to Figure 5, an audio visual (AV) reproduction system 700 for reproducing AV data is shown in a second embodiment including a plurality of subtitle substreams in a player model including a plurality of video reproduction units. The AV reproduction system 700 receives a composite media stream 102 provided by a composite media source 104.

The composite media stream 102 includes a video stream 106, an audio stream 108, and a subtitle stream 110 including a plurality of subtitle substreams. A composite media stream separator unit 112 receives the composite media stream 102 and produces the video stream 106, the audio stream 108, and the plurality of subtitle substreams, The composite media stream separator unit 112 includes a composite media stream buffer 114 for receiving and storing the composite media stream 102 and producing a buffered composite media stream 116. The buffered composite media stream 116 is applied to the composite media stream decoder 118 that separates the video stream 106, the audio stream 108, and the subtitle stream 110 from the buffered composite media stream 116.

A video decoder unit 120 receives the video stream 106 and produces a decoded video output 122. An audio decoder unit 130 receives the audio stream 108 and produces a decoded audio output 132. A subtitle decoder unit 140 of the present embodiment simultaneously decodes a plurality of subtitle substreams to produce a corresponding plurality of decoded subtitle outputs (148, 156). This buffering and decoding is done for each of the user selected "n" subtitle substreams.

A plurality of video rendering units (158, 702) each receive the decoded video output 122 and the plurality of decoded subtitle outputs (148, 156) to produce a plurality of rendered video outputs (160, 704). Each rendered video output (160, 704) is an overlay of the corresponding decoded subtitle output (148, 156) on the decoded video output 122. The decoded audio output 132 and the rendered video output 160 are applied to a reproduction unit 162 having an audio reproduction unit 164 and a video reproduction unit 166. The audio reproduction unit 164 receives the decoded audio output 132 and reproduces the decoded audio output in audible form. The video reproduction units 166, 706 receive the rendered video output 160, 704 and reproduce the rendered video output 160, 704 in a visual form.

A decode system controller 170 provides configuration and synchronization for the AV reproduction system 700. In addition to the information regarding desired substream decoding provided by the AV application, the decode system controller 170 receives user preference information from a user command unit 172. The user command unit 172 includes a subtitle substream selector 174 that provides a selected subtitle substream user input 176 regarding the selection of subtitle substreams. The user command unit 172 can include a subtitle substream display area selector 178 that provides a display location user input 180 regarding the selected display location for the selected subtitle substreams.

The user command unit 172 can also include an auto-repeat selector 182 that provides an auto-repeat user input 184 for commanding an automatic repeating the reproduction of a predetermined portion of the rendered video output 160 with either the same display configuration as previously reproduced, or with a different display configuration showing either the same set of selected subtitles or a different set of selected subtitles.

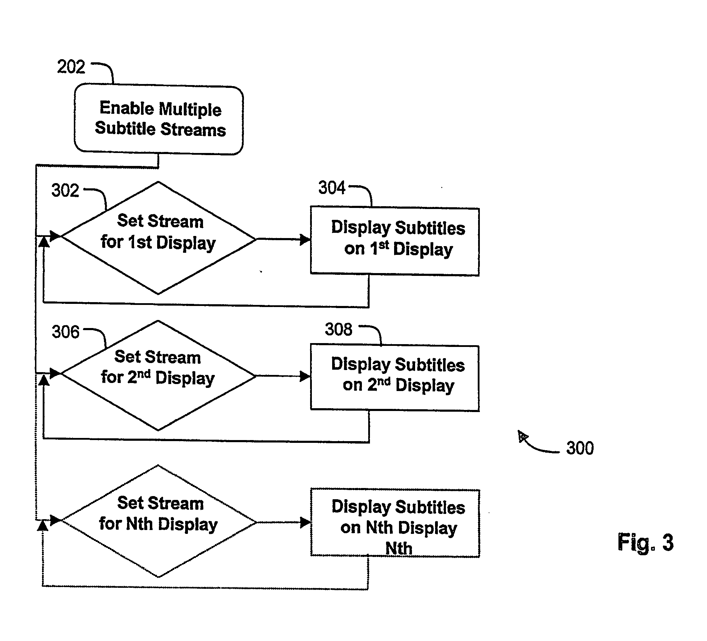

Figure 3 is a flow diagram showing a user selection method for rendering a plurality of subtitle substreams on multiple video reproduction units. A user enables the selection of multiple subtitle streams in step 202 as described above. For each of the selected subtitle streams is assigned to a particular video reproduction unit. For example, the subtitle substream selected as the first subtitle substream is set for display in step 302. Once the first subtitle substream is selected, it is assigned to the first video reproduction unit in step 304. Similarly, the subtitle substream selected as the second subtitle substream is set for display in step 306. Once the second subtitle substream is selected, it is assigned to the second display unit in step 308. This process is repeated for each of the selected subtitle substreams.

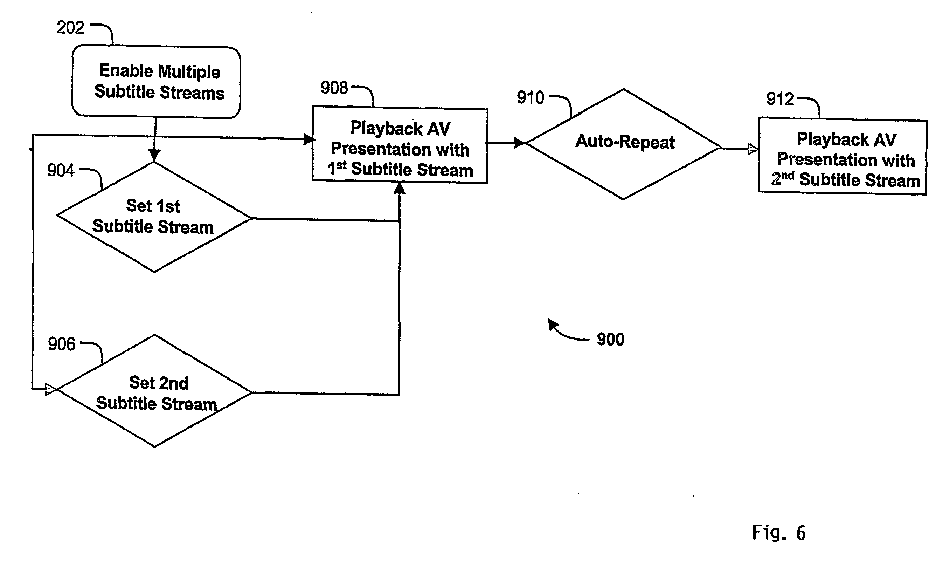

Figure 6 is a flow diagram showing a user model associated with the first and second embodiments including the auto-repeat feature. A user enables the selection of multiple subtitle substreams in step 902. The display location for the first subtitle substream is set in step 904. The display location for the second subtitle substream is set in step 906. Once all of the selected subtitle substreams are selected, the user initiates reproduction with only the first subtitle substream overlaid on the visual reproduction unit as described.

The user can initiate an auto-repeat which will repeat the same decoded video output but rendered with the second subtitle substream for an alternate subtitle display during the second reproduction as shown in step 912. The auto-repeat function can be initiated by pressing a key on the specially programmed remote unit, or can be defined in the setup, or upon reaching a predetermined frame. The rendered video output can thus toggle every other time for two selected subtitle substreams. Similarly, for three selected subtitle substreams, a subtitle substream will be repeated every third auto-repeat.

EXAMPLE 5 : The system could provide an interface to easily repeat a segment of the AV presentation - an "auto-repeat" function. The segment length of the auto-repeat function can be user definable or fixed. On each auto-repeat some media-streams are alternated between user selected choices. The media-streams may be interchangeable or independent. The system would provide the user with an interface to define which streams should be alternated. This interface would be separate from AV presentation playback.

EXAMPLE 6 : Currently, a DVD-Video player can playback only one subtitle stream during the DVD-Video application runtime. To change the subtitle stream requires many button presses on the remote control (menu button, selection of settings menu, selection of new subtitle stream, resume play button). In addition, the user would then have to "rewind" the presentation to the point where they wanted to view the subtitle change. This innovation, when applied to DVD-Video, defines a method for easily alternating between user selected subtitle streams during a user repeated playback of an AV presentation segment. This provides a useful tool for language education.

EXAMPLE 7 : Currently, DVD-Video players can playback only one audio stream during the DVD-Video application runtime. To change the audio stream requires many button presses on the remote control (menu button, selection of settings menu, selection of new audio stream, resume play button). In addition, the user would then have to "rewind" the presentation to the point where they wanted to listen to the audio change. This innovation, when applied to DVD-Video, defines a method for easily (one key press on remote control) alternating between user selected audio streams during a user repeated playback of an AV presentation segment. This provides a useful tool for language education and also for repeating AV presentation scenes with normal audio and special purpose audio (commentary etc).

EXAMPLE 8 : Currently, to change audio and subtitle stream playback on a DVD-Video title requires many button presses on the remote control (menu button, selection of settings menu, selection of new audio stream, selection of subtitle stream, resume play button). In addition, the user would then have to "rewind" the presentation to the point where they wanted to experience the changes. This innovation, when applied to DVD-Video, defines a method for easily (one key press on remote control) alternating between audio with subtitle playback and audio only playback. This provides a useful tool for language education (view scene with audio and subtitle then view scene with only audio).

EXAMPLE 9 : In addition to an "auto-repeat" function described in Example 3, the system could further provide a means for the user to define a "repeat-point" during the AV application runtime. The repeat-point would mark a point where the auto-repeat function starts the auto-repeat playback. The innovation would allow the user to easily repeat playback of any segment.

EXAMPLE 10 : Currently, a DVD-Video player does not provide "auto-repeat" or "repeat-point" functionality. This innovation, when applied to DVD-Video, defines a method for easily alternating between user selected audio and/or subtitle streams during a user repeated playback of an AV presentation segment. The auto-repeat function can be initiated, for example, by one key press on specially programmed remote control. Setting the repeat-point itself can be accomplished by a key press on the specially programmed remote control whereby the user can define the repeat-point which indicates the starting point of the auto-repeat function. A user can press a particular key on the remote control to set the repeat point, and at a later time press the auto-repeat key. These two key presses can define the two end points, a beginning point and an ending point, of a repeating reproduction loop.

EXAMPLE 11 : As an alternative, the "auto-repeat" function can provide a way to define repeat-points at authoring time. This would allow the content creator to define segments for easy auto-repeat.

EXAMPLE 12 : Currently, the DVD-Video format does not provide a way for the content creator to define repeat-points. By adding a structure for repeat points, the content creator can define logical segments in a DVD-Video title for user auto-repeat of subtitles and/or audio in players that support "auto-repeat". Such a structure can be added by utilization of reserved fields in existing structures or by adding new structures to the data on the disc.

EXAMPLE 13 : Two or more unique subtitle streams are available for one AV application. The system provides each user with a personalized display and an option of which subtitle stream to decode on their personal display. Figures 7-8 show the possible player models for this example while Figures 2A-2D show the user models. This example application would be useful for providing personalized dialog translation when the same media presentation is provided at the same time to multiple users.

## Claims

1. An audio visual (AV) reproduction system (700) for reproducing audio visual data including a plurality of subtitle substreams, the audio visual reproduction system receiving a media stream (102) provided by a media source (104), the media stream (102) including a video stream (106), an audio stream (108), and a subtitle stream (110) including a plurality of subtitle substreams, the audio visual reproduction system comprising:
a media stream separator unit (112) for receiving the media stream (102) and producing the video stream (106), the audio stream (108), and the plurality of subtitle substreams;
a video decoder unit (120) for receiving the video stream (106) and producing a decoded video output (122);
an audio decoder unit (130) for receiving the audio stream (108) and producing a decoded audio output (132);
a subtitle decoder unit (140);
**characterised in that** the plurality of subtitle substreams are in a player model (700) specified by a de-facto standard, including a plurality of video display units; and
the subtitle decoder unit (140) simultaneously decodes a plurality of subtitle substreams to produce a corresponding plurality of decoded subtitle outputs (148, 156); and
the reproduction system (700) further comprises a plurality of video rendering units (158 702), each video rendering unit (158, 702) for receiving the decoded video output (122) and one of the plurality of decoded subtitle outputs (148, 156) to produce a plurality of rendered video outputs (160, 704).

2. The audio visual (AV) reproduction system of Claim 1,
wherein each rendered video output (160, 704) is an overlay of the decoded subtitle output selected by users from simultaneously decoded subtitle substreams on the decoded video output for reproduction by a plurality of video display units.

3. The audio visual (AV) reproduction system (100) of Claim 1, further comprising:
a decode system controller (170) for receiving a user input to select a plurality of subtitle substreams from the plurality of subtitle substreams for decoding and rendering each decoded subtitle output (148, 156) selected by users onto a video display, the decode system controller (170) for receiving user input to select a plurality of subtitle streams (110) for decoding and determine a display location for each of the plurality of decoded subtitle outputs (148, 156) on the plurality of video displays, the decode system controller (170) synchronizing the video output, the audio output, and the plurality of subtitle outputs.

4. The audio visual (AV) reproduction system of Claim 1, further comprising:
a plurality of display units for receiving one of the plurality of rendered video outputs (160, 704).

## Patentansprüche

1. Audiovisuelles (AV) Reproduktionssystem (700) zum Reproduzieren von audiovisuellen Daten, enthaltend eine Mehrzahl von Untertitelsubstreams, wobei das audiovisuelle Reproduktionssystem einen Medienstream (102) empfängt, der von einer Medienquelle (104) bereitgestellt wird, wobei der Medienstream (102) einen Videostream (106), einen Audiostream (108) und einen Untertitelstream (110) mit einer Mehrzahl von Untertitelsubstreams enthält, wobei das audiovisuelle Reproduktionssystem umfasst:
eine Medienstream-Trenneinheit (112) zum Empfangen des Medienstreams (102) und Produzieren des Videostreams (106), des Audiostreams (108) und der Mehrzahl von Untertitelsubstreams,
eine Videodekodiereinheit (120) zum Empfangen des Videostreams (106) und Produzieren einer dekodierten Videoausgabe (122);
eine Audiodekodiereinheit (130) zum Empfangen des Audiostreams (108) und Produzieren einer dekodierten Audioausgabe (132);
eine Untertiteldekodiereinheit (140);
**dadurch gekennzeichnet, dass** die Mehrzahl von Untertitelsubstreams in einem Playermodell (700) vorliegen, festgelegt durch einen De-facto-Standard, enthaltend eine Mehrzahl von Videoanzeigeeinheiten; und
die Untertiteldekodiereinheit (140) gleichzeitig eine Mehrzahl von Untertitelsubstreams dekodiert, um eine entsprechende Mehrzahl von dekodierten Untertitelausgaben (148, 156) zu produzieren; und
das Reproduktionssystem (700) ferner eine Mehrzahl von Videowiedergabeeinheiten (158, 702) umfasst, wobei jede Videowiedergabeeinheit (158, 702) zum Empfangen der dekodierten Videoausgabe (122) und einer der Mehrzahl von dekodierten Untertitelausgaben (148, 156) vorgesehen ist, um eine Mehrzahl von wiedergegebenen Videoausgaben (160, 704) zu produzieren.

2. Audiovisuelles (AV) Reproduktionssystem nach Anspruch 1,
wobei jede wiedergegebene Videoausgabe (160, 704) eine Überlagerung der dekodierten Untertitelausgabe ist, die von Benutzern aus gleichzeitig dekodierten Untertitelsubstreams in der dekodierten Videoausgabe zur Reproduktion durch eine Mehrzahl von Videoanzeigeeinheiten ausgewählt wurde.

3. Audiovisuelles (AV) Reproduktionssystem (100) nach Anspruch 1, ferner umfassend:
eine Dekodiersystemsteuerung (170) zum Empfangen einer Benutzereingabe, um eine Mehrzahl von Untertitelsubstreams aus der Mehrzahl von Untertitelsubstreams auszuwählen, um jede dekodierte Untertitelausgabe (148, 156), die von Benutzern ausgewählt wurde, zu dekodieren und auf einer Videoanzeige wiederzugeben, wobei die Dekodiersystemsteuerung (170) vorgesehen ist, um eine Benutzereingabe zu empfangen, um eine Mehrzahl von Untertitelstreams (110) zum Dekodieren auszuwählen, und um eine Anzeigeposition für jede der Mehrzahl der dekodierten Untertitelausgaben (148, 156) auf der Mehrzahl der Videoanzeigen zu bestimmen, wobei die Dekodiersystemsteuerung (170) die Videoausgabe, die Audioausgabe und die Mehrzahl von Untertitelausgaben synchronisiert.

4. Audiovisuelles (AV) Reproduktionssystem nach Anspruch 1, ferner umfassend:
eine Mehrzahl von Anzeigeeinheiten zum Empfangen einer der Mehrzahl von wiedergegebenen Videoausgaben (160, 704).

## Revendications

1. Système de reproduction audiovisuelle (AV) (700) destiné à reproduire des données audiovisuelles incluant une pluralité de sous-flux de sous-titres, le système de reproduction audiovisuelle recevant un flux multimédia (102) fourni par une source multimédia (104), le flux multimédia (102) incluant un flux vidéo (106), un flux audio (108) et un flux de sous-titres (110) comprenant une pluralité de sous-flux de sous-titres, le système de reproduction audiovisuelle comprenant :
une unité de séparation de flux multimédias (112) pour recevoir le flux multimédia (102) et générer le flux vidéo (106), le flux audio (108), et la pluralité de sous-flux de sous-titres ;
une unité de décodage vidéo (120) pour recevoir le flux vidéo (106) et générer une sortie vidéo décodée (122) ;
une unité de décodage audio (130) pour recevoir le flux audio (108) et générer une sortie audio décodée (132) ;
une unité de décodage de sous-titres (140) ;
**caractérisé en ce que** la pluralité de sous-flux de sous-titres se situe dans un modèle de lecteur (700) spécifié par une norme de facto, incluant une pluralité d'unités d'affichage vidéo ; et
l'unité de décodage de sous-titres (140) décode simultanément une pluralité de sous-flux de sous-titres en vue de générer une pluralité correspondante de sorties de sous-titres décodés (148, 156) ; et
le système de reproduction (700) comprend en outre une pluralité d'unités de rendu vidéo (158, 702), chaque unité de rendu vidéo (158, 702) étant destinée à recevoir la sortie vidéo décodée (122) et l'une de la pluralité de sorties de sous-titres décodés (148, 156) en vue de générer une pluralité de sorties vidéo rendues (160, 704).

2. Système de reproduction audiovisuelle (AV) selon la revendication 1,
dans lequel chaque sortie vidéo rendue (160, 704) représente une superposition de la sortie de sous-titres décodés, sélectionnée par les utilisateurs à partir de sous-flux de sous-titres simultanément décodés, sur la sortie vidéo décodée à reproduire par une pluralité d'unités d'affichage vidéo.

3. Système de reproduction audiovisuelle (AV) (100) selon la revendication 1, comprenant en outre :
un contrôleur de système de décodage (170) pour recevoir une entrée d'utilisateur destinée à sélectionner une pluralité de sous-flux de sous-titres à partir de la pluralité de sous-flux de sous-titres, en vue du décodage et du rendu de chaque sortie de sous-titres décodés (148, 156), sélectionnée par les utilisateurs, sur un écran d'affichage vidéo, le contrôleur de système de décodage (170) étant destiné à recevoir une entrée d'utilisateur visant à sélectionner une pluralité de flux de sous-titres (110) pour décoder et déterminer un emplacement d'affichage pour chacune de la pluralité de sorties de sous-titres décodés (148, 156) sur la pluralité d'écrans d'affichage vidéo, le contrôleur de système de décodage (170) synchronisant la sortie vidéo, la sortie audio, et la pluralité de sorties de sous-titres.

4. Système de reproduction audiovisuelle (AV) selon la revendication 1, comprenant en outre :
une pluralité d'unités d'affichage pour recevoir l'une de la pluralité de sorties vidéo rendues (160, 704).
